# EUROPEAN PATENT SPECIFICATION

(11) **EP 3 989 033 B1**
(45) Date of publication and mention of the grant of the patent: **17.05.2023**
(21) Application number: 21215222.7
(22) Date of filing: 09.01.2018
(51) Int. Cl.: G05D 1/02, A01D 75/18, A01D 75/20, A47L 9/28, F16P 3/12, A01D 34/00

(54) **IMPROVED WORK SCHEDULING FOR A ROBOTIC LAWNMOWER**
VERBESSERTE ARBEITSABLAUFPLANUNG FÜR EINEN ROBOTERRASENMÄHER
PLANIFICATION DE TRAVAIL AMÉLIORÉE POUR UNE TONDEUSE À GAZON ROBOTISÉE

(30) Priority: 19.01.2017 SE 1750043
(43) Date of publication of application: 27.04.2022
(62) Divisional of application: 18741402.4
(73) Proprietor: HUSQVARNA AB, 561 82 Huskvarna (SE)
(72) Inventor: KAMFORS, Mattias, Jönköping (SE); ÖHRLUND, Magnus, Malmbäck (SE)

(56) References cited:
- EP-A2- 2 945 037
- WO-A1-2014/027945
- US-A1- 2013 238 130

## Description

### TECHNICAL FIELD

This application relates to robotic lawnmowers and in particular to a system and a method for performing improved scheduling of work to be performed by a robotic lawnmower.

### BACKGROUND

Automated or robotic lawnmowers are becoming increasingly more popular. In a typical deployment, a work area, such as a garden, is enclosed by a boundary cable with the purpose of keeping the robotic lawnmower inside the work area. The robotic lawnmower is typically configured to work in a random pattern inside the work area. As such, it does not take into account whether it is disturbing the other inhabitants or persons occupying the work area.

Prior art models have been proposed where the robotic lawnmower is designed to perform its work according to a schedule. The schedule may be set by a user or it may be set dynamically depending on different weather reports or situations.

Prior art models have also been proposed that schedule its work to different sections of the work area so that it can keep track of which sections have been serviced. This is beneficial for short operation sessions, as it would be practically impossible to mow or service the complete work area in a short time slot when operating in a random fashion, but possible to do so in a smaller area or section.

However, as will be discussed in the below, the inventors have realized problems with these traditional manners of scheduling the robotic lawnmower's work.

Prior art models have also been proposed that are able to detect an imminent collision with an object, either through a range finder or even possibly a camera used to detect an object in the path of the robotic lawnmower and then act as when detecting a collision and simply change the heading of the robotic lawnmower. However, such models may still be annoying to its surroundings and may still accidentally collide with moving objects.

One such model is disclosed in the application published as WO2014027945A1 that discloses a method for processing object detection-related information may include receiving information indicative of an encounter between a robotic vehicle and an object responsive to communication received from a sensor of the robotic vehicle while the robotic vehicle transits a parcel, determining a location of the robotic vehicle at a time corresponding to occurrence of the encounter, determining whether the location corresponds to a location associated with a known object associated with the parcel, and classifying the object as an unknown object based on the location not corresponding to the location associated with the known object.

Another such model is disclosed in the application published as US2013238130 A1 that discloses path recording and automatic navigation that may be applicable to various applications, including, but not limited to, lawn mowing.

And, another such model is disclosed in the application published as EP2945037A2 that discloses a robotic lawnmower confinement system includes at least two dispenser units and a powered unit in wired connection with the at least two dispenser units. Each dispenser unit includes a housing containing a length of boundary wire electrically connected to the housing at one end and terminating at a mating connector for transferring an electrical signal at the opposite end. Each dispenser unit also includes a receiving terminal disposed on the housing for receiving a mating connector of another dispenser unit. The powered unit includes at least one electrical connector configured to connect and deliver current to at least one of the at least two dispenser units. The at least two dispenser units and the powered unit can be arranged and connected to form a loop of connected boundary wires recognizable by the robotic lawnmower.

Thus, there is a need for improved scheduling of a robotic lawnmower's work.

### SUMMARY

As will be disclosed in detail in the detailed description, the inventors have realized that the traditional manner of scheduling the robotic lawnmower's work brings about at least two problems. It is therefore an object of the teachings of this application to overcome or at least reduce those problems by providing robotic lawnmower system comprising a charging station, a living object sensor and a robotic lawnmower configured to operate within a work area according to an operating schedule, the robotic lawnmower being configured to detect and identify an object as a living object; and adapt the operating schedule accordingly.

It is also an object of the teachings of this application to overcome the problems by providing a method for use in a robotic lawnmower system comprising a charging station, a living object sensor and a robotic lawnmower configured to operate within a work area according to an operating schedule, the method comprising detecting and identifying an object as a living object; and adapting the operating schedule accordingly.

Thus, the scheduling may be improved to also include very short time slots, and by performing the work when there is no human activity in the work area, or at least not close to where the robotic lawnmower is sent to operate.

It is also an object of the teachings of this application to overcome the problems by providing a method according to the claims and a robotic lawnmower for executing the method.

Other features and advantages of the disclosed embodiments will appear from the following detailed disclosure, from the attached dependent claims as well as from the drawings. Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention will be described in further detail under reference to the accompanying drawings in which:
Figure 1A shows an example of a robotic lawnmower according to one embodiment of the teachings herein;
Figure 1B shows a schematic view of the components of an example of a robotic lawnmower according to one embodiment of the teachings herein;
Figure 2 shows an example of a robotic lawnmower system (200) according to the teachings herein;
Figure 3 shows a schematic overview of a robotic lawnmower system, such as that in figure 2, in which a robotic lawnmower is configured to detect living object(s) and adapt its operating schedule according to the teachings herein;
Figure 4 shows a schematic overview of a robotic lawnmower system, such as that in figure 2 or 3, in which a robotic lawnmower is configured to detect living object(s) and adapt its operating schedule according to the teachings herein;
Figure 5 shows a corresponding flowchart for a method according to an example embodiment;
Figure 6 shows a schematic overview of a robotic lawnmower system 200 according to the teachings herein; and
Figure 7 shows an example embodiment of a robotic lawnmower system 200 according to the teachings herein.

### DETAILED DESCRIPTION

The disclosed embodiments will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout.

It should be noted that all indications of rotational speeds, time durations, work loads, battery levels, operational levels etc. are given as examples and may be varied in many different ways as would be apparent to a skilled person. The variations may be for individual entities as well as for groups of entities and may be absolute or relative.

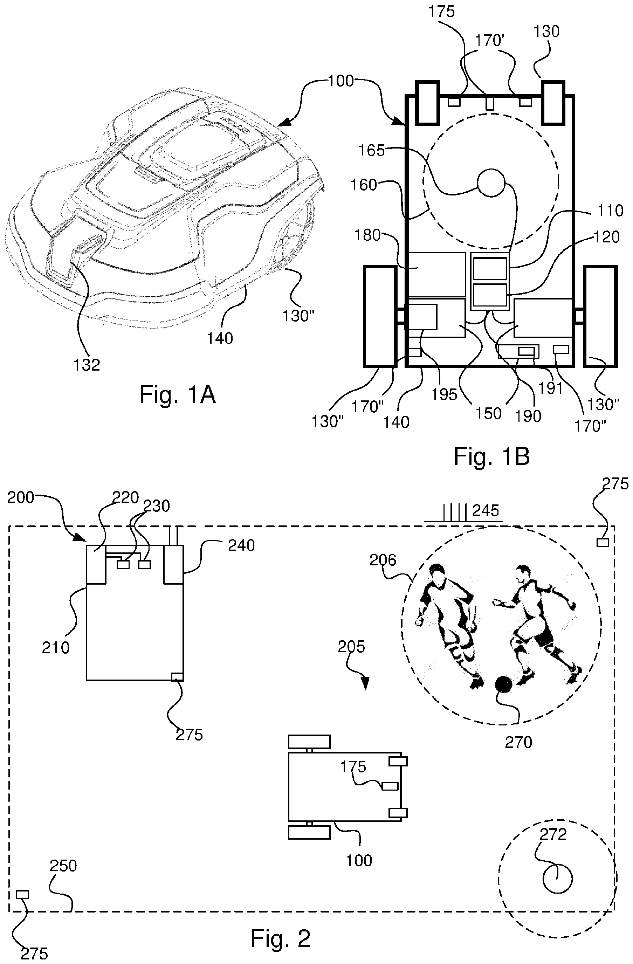

Figure 1A shows a perspective view of a robotic lawnmower 100, having a body 140 and a plurality of wheels 130 (only one shown). As can be seen, the robotic lawnmower 100 may comprise charging skids for contacting contact plates (not shown in figure 1, but referenced 230 in figure 2) when docking into a charging station (not shown in figure 1, but referenced 210 in figure 2) for receiving a charging current through, and possibly also for transferring information by means of electrical communication between the charging station and the robotic lawnmower 100.

Figure 1B shows a schematic overview of the robotic lawnmower 100, having a body 140 and a plurality of wheels 130.

In the exemplary embodiment of figure 1B the robotic lawnmower 100 has 4 wheels 130, two front wheels 130' and the rear wheels 130". At least some of the wheels 130 are drivably connected to at least one electric motor 150. It should be noted that even if the description herein is focused on electric motors, combustion engines may alternatively be used possibly in combination with an electric motor.

In the example of figure 1B, each of the rear wheels 130" is connected to a respective electric motor 150. This allows for driving the rear wheels 130" independently of one another which, for example, enables steep turning.

The robotic lawnmower 100 also comprises a controller 110. The controller 110 may be implemented using instructions that enable hardware functionality, for example, by using executable computer program instructions in a general-purpose or special-purpose processor that may be stored on a computer readable storage medium (disk, memory etc) 120 to be executed by such a processor. The controller 110 is configured to read instructions from the memory 120 and execute these instructions to control the operation of the robotic lawnmower 100 including, but not being limited to, the propulsion of the robotic lawnmower. The controller 110 may be implemented using any suitable, publically available processor or Programmable Logic Circuit (PLC). The memory 120 may be implemented using any commonly known technology for computer-readable memories such as ROM, RAM, SRAM, DRAM, FLASH, DDR, SDRAM or some other memory technology.

The robotic lawnmower 100 may further have at least one sensor 170; in the example of figure 1 there are four sensors divided into a first sensor pair 170' and a second sensor pair 170", respectively arranged at each wheel 130', 130" to detect a magnetic field (not shown) and for detecting a boundary cable and/or for receiving (and possibly also sending) information from a signal generator (will be discussed with reference to figure 2). The sensors 170 may thus be arranged as front sensors 170' and rear sensors 170".

In some embodiments, the sensors 170 may be connected to the controller 110, and the controller 110 may be configured to process and evaluate any signals received from the sensor pairs 170, 170'. The sensor signals may be caused by the magnetic field being generated by a control signal being transmitted through a boundary cable. This enables the controller 110 to determine whether the robotic lawnmower 100 is close to or crossing a boundary cable, or inside or outside an area enclosed by the boundary cable. This also enables the robotic lawnmower 100 to receive (and possibly send) information from the control signal.

The robotic lawnmower 100 also comprises a grass cutting device 160, such as a rotating blade 160 driven by a cutter motor 165. The grass cutting device being an example of a work tool 160 for a robotic lawnmower 100. The cutter motor 165 is connected to the controller 110 which enables the controller 110 to control the operation of the cutter motor 165. The controller may also be configured to determine the load exerted on the rotating blade, by for example measure the power delivered to the cutter motor 165 or by measuring the axle torque exerted by the rotating blade. The robotic lawnmower 100 also has (at least) one battery 180 for providing power to the motors 150 and the cutter motor 165.

The robotic lawnmower 100 may further comprise at least one supplemental navigation sensor 195, such as a deduced reckoning navigation sensor for providing signals for deduced reckoning navigation, also referred to as dead reckoning. Examples of such deduced reckoning navigation sensor(s) 195 are odometers and compasses. The supplemental navigation sensor may also or alternatively be implemented as a vision navigation system, or Ultra Wide Band radio navigation system to mention a few examples. The supplemental sensor 195 will hereafter be exemplified through the deduced reckoning sensor.

The robotic lawnmower 100 may also or alternatively comprise a satellite navigation sensor, such as a Global Positioning System (GPS) device 190, or a GLONASS device.

Using the navigation sensors 190, 195 the robotic lawnmower may be configured to navigate the work area using stored coordinates. The coordinates for the work area, may be stored in the form of a map of the work area (referenced 205 in figure 2). Such a map may include information on obstacles (referenced 272 in figure 2). The robotic lawnmower may thus be arranged to navigate the work area in a precise manner using the navigation sensors 190, 195 and the map, thereby also being able to service different portions of the work area.

In one embodiment, the map or the work area may be divided into segments, and the robotic lawnmower may then be configured to service or operate in a segment at a time. The scheduling of such a robotic lawnmower involves planning which segment is serviced at what time.

In one embodiment, the robotic lawnmower is configured to navigate the work area based on the navigation sensors 190, 195 without utilizing a boundary cable, or using the boundary cable only as an emergency fall back, should the other navigation sensors fail. The boundary cable is as such not an essential part of the robotic lawnmower system.

The robotic lawnmower 100 may further be arranged with a wireless communication interface 191 for communicating with other devices, such as a server, a personal computer or smartphone, or the charging station. Examples of such wireless communication devices are Bluetooth^{™}, Global System Mobile (GSM) and LTE (Long Term Evolution), to name a few.

The robotic lawnmower 100 also comprises a living object sensor 175 for sensing the presence of a living object, such as a human 270 or an animal. The living object sensor may be a single sensor, or it may be a combination of sensors, possibly being of different types.

The living object sensor 175 comprises a camera for registering at least one image (possibly being a video stream), and based on this at least one image identify the presence of any living objects, such as humans or animals. The robotic lawnmower is thus configured to detect and identify a living object, such as a human or animal through image analysis. Since image analysis is generally known and the exact details of the analysis is not at the core of this invention, no further details will be given on this matter. The same holds for tracking an object through image analysis, which the robotic lawnmower may also be configured to do. In one embodiment, the robotic lawnmower is configured to determine that a living object has moved as an alternative to actually and continuously tracking the object.

The living object sensor 175 is also configured to identify a tracked or detected object to be indeed a living object by differentiating the living object from innate objects, such as lawn furniture, being an example of stationary objects, and balls and lawn maintenance equipment being examples of moving innate objects.

The living object sensor may be configured to identify a tracked or detected object to be a living object by detecting a parameter of the objects, such as a shape, a color, a face, a movement pattern, a sound recording of a sound print to mention a few examples, and comparing the parameter to stored or otherwise predefined reference parameters. The reference parameters may be stored locally in a memory or remotely in a server or web service. The reference parameter may be prestored or it may be updated or stored during the operation of the robotic lawnmower. In one such embodiment, the robotic lawnmower may be configured to repeatedly detect and thereby learn to recognize a living object frequently visiting the work area. The living object sensor may also be configured to record an object as being a living object by storing a photograph or other recording of at least one parameter for that object.

For the purpose of this application a living object is considered to be a human (or animal, such as a pet) that should be protected from any annoyance and/or danger proposed by the robotic lawnmower. It is not simply a moving object (such as a windmill) nor is it a stationary object. As the living object is not only to be protected from injury but also from being disturbed, special requirements need to be taken in to consideration, such as determining the speed of the living object and adapting the size of the non-working area accordingly. For a higher speed, a greater non-working area should be defined. More on this later on.

As has been discussed and will be discussed, the actual operations of the living object sensor 175 may be performed (at least in part) by the living object sensor 175 in combination with the controller 110 of the robotic lawnmower 100.

The robotic lawnmower is thus configured to determine that a detected object is a living object, possibly by comparing a parameter of the detected object to a reference parameter.

The living object sensor 175 may also comprise capacitance sensor, a hum or ripple sensor, ultrasonic sensor, RFID (Radio Frequency ID) sensor, cellular communication sensor or an InfraRed sensor.

One type of sensor is a sound sensor for registering at least one sound clip and based on the at least one sound clip, identify the presence of a living object, possibly by comparing the recorded sound clip to a library of known sounds made by various living objects. The robotic lawnmower is thus configured to detect and identify a living object, such as a human or animal through sound analysis. Since sound analysis is generally known and the exact details of the analysis is not at the core of this invention, no further details will be given on this matter.

It should be pointed out that the sensor in combination with the controller of the robotic lawnmower 100 or another controller of the robotic lawnmower system, is configured to not only detect a living object, but to identify the object as being a living object. Such analysis may be done by detecting an object, compare the object's shape to known shapes of living objects (humans, animals) and to determine that the object is moving and/or making sounds, said sounds possibly being associated with behaviours of living objects. This allows the robotic lawnmower to differentiate between stationary objects looking like living objects (such as teddy bears, other toys or statues). This also allows the robotic lawnmower to differentiate living objects from other moving objects such as washing hanging out to dry or flags.

The living object sensor 175 in combination with the controller, may alternatively or additionally be used to identify previously known or defined objects, living or not, and to adapt the operation accordingly.

Figure 2 shows a schematic view of a robotic lawnmower system 200 in one embodiment. The schematic view is not to scale. The robotic lawnmower system 200 comprises a charging station 210 and a boundary cable 250 arranged to enclose a work area 205, in which the robotic lawnmower 100 is supposed to serve.

As with figure 1, the robotic lawnmower is exemplified by a robotic lawnmower, but the teachings herein may also be applied to other robotic lawnmowers adapted to operate within a work area.

The charging station may have a base plate 215 for enabling the robotic lawnmower to enter the charging station in a clean environment and for providing stability to the charging station 210.

The charging station 210 has a charger 220, in this embodiment coupled to two charging plates 230. The charging plates 230 are arranged to co-operate with corresponding charging plates (not shown) of the robotic lawnmower 100 for charging the battery 180 of the robotic lawnmower 100.

The charging station 210 also has, or may be coupled to, a signal generator 240 for providing a control signal 245 to be transmitted through the boundary cable 250. The signal generator thus comprises a controller for generating the control signal. The control signal 245 comprises an alternating current, such as a continuously or regularly repeated current signal. The control signal may be a CDMA signal (CDMA - Code Division Multiple Access). The control signal may also or alternatively be a pulsed control signal, the control signal thus comprising one or more current pulses being transmitted periodically. The control signal may also or alternatively be a continuous sinusoidal wave. As is known in the art, the current signal will generate a magnetic field around the boundary cable 250 which the sensors 170 of the robotic lawnmower 100 will detect. As the robotic lawnmower 100 (or more accurately, the sensor 170) crosses the boundary cable 250 the direction of the magnetic field will change. The robotic lawnmower 100 will thus be able to determine that the boundary cable has been crossed, and take appropriate action by controlling the driving of the rear wheels 130" to cause the robotic lawnmower 100 to turn a certain angular amount and return into the work area 205. For its operation within the work area 205, in the embodiment of figure 2, the robotic lawnmower 100 may alternatively or additionally use the satellite navigation device 190, supported by the deduced reckoning navigation sensor 195 to navigate the work area 205.

Additionally, the robotic lawnmower 100 may use the satellite navigation device 190 to remain within and map the work area 205 by comparing the successive determined positions of the robotic lawnmower 100 against a set of geographical coordinates defining the boundary 250, obstacles, keep-out areas etc of the work area 205. This set of boundary defining positions may be stored in the memory 120, and/or included in a digital (virtual) map of the work area 205. The boundary 250 of the work area 205 may also be marked by a boundary cable supplementing the GNSS navigation to ensure that the robotic lawnmower stays within the work area, even when no satellite signals are received.

In one embodiment, the living object sensor is arranged on the charging station 210 or at another location in or adjacent the work area 205. Such sensors are indicated in figure 2 as reference 275.

In one embodiment, the robotic lawnmower 100 is configured to receive sensor information from the remote sensors 275. In one such embodiment, the robotic lawnmower 100 is configured to receive sensor information to be processed or already processed sensor information for adapting the operating schedule accordingly. In one such embodiment, the robotic lawnmower 100 is configured to receive processed sensor information in the form of an adapted operating schedule.

In one embodiment, the operating schedule is a simple schedule of simply random operation, wherein the adaptation is simply to remove the robotic lawnmower from the identified living object.

As can be seen in figure 2, there is one example of a non-living - or at least stationary or permanent - object exemplified as a tree (trunk) 272. There is also an example of living object(s) 270, playing football (soccer).

According to the invention the robotic lawnmower 100 is configured to detect the presence of living objects 270 utilizing the living object sensor 175. In one embodiment, the robotic lawnmower is also configured to determine the location, or at least the approximate location, for the living object(s) 270.

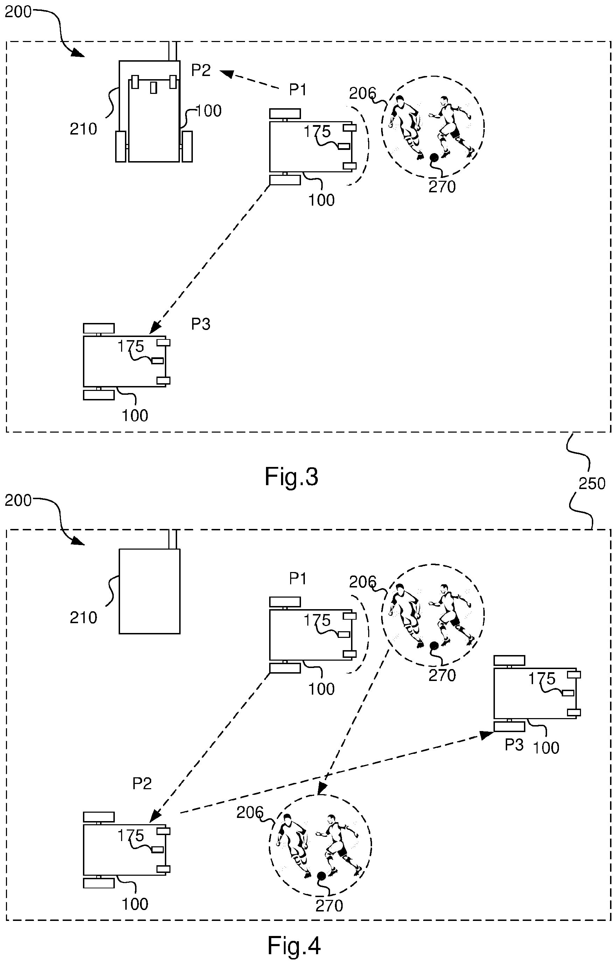

Figure 3 shows a schematic view of the operation of a robotic lawnmower 100 according to one embodiment.

As the presence of living object(s) 270 is detected at position P1 (as is indicated by the dashed curved line), the robotic lawnmower 100 is configured to adapt its operating schedule accordingly.

The operating schedule may be a simple one that simply allows the robotic lawnmower to operate when it is charged and only returning to the charging station 210 to recharge. The operating schedule may also be more advanced, operating according to a weekly schedule, time of day, calendar or other such schedules. The operating schedule may also work based on sensors such as weather sensors, and/or work sensors (such as sensors for determining the height of cut grass).

One manner of adapting the work schedule as a living object(s) is detected is to interrupt the operation and possibly return the robotic lawnmower to the charging station 210, as in position P2. The operation may then resume as it is detected that no living object is detected anymore. The operation may also or alternatively be resumed at the next scheduled work session (such as when fully charged or any of the manners exemplified above).

The robotic lawnmower 100 is configured to note the position or location of the living object(s) 270 and define a non-working area 206 around the location of the living object(s) 270. Such an area may be defined according to the image analysis thus having a size adapted to the extension of the living object(s) 270. Such an area may also be defined according to a determined speed of the living object, where a higher speed results in a larger area. Such an area 206 may also be given a fixed or standard size (for example 10 meters radius). The non-working area 206 may also be defined as an already defined sub area of the work area, the sub area at least partially overlapping the location of the living objects 270.

The defined non-working area is thus defined - as in generated - based on the living object and is not a simple predefined work area that is being marked as occupied. Such predefined areas suffer from that they are not adapted to the living object and may not be of an adequate size. Also, a living object may be close to the edge of a predefined area, and thus be disturbed by a robotic lawnmower coming close that edge. The present invention does not suffer from such disadvantages.

In one such embodiment, the robotic lawnmower may be configured to adapt its operating schedule by (temporarily) excluding the non-working area 206 from its intended or allowed work area 205.

In one such embodiment the robotic lawnmower 100 is thus configured to operate even though living object(s) 270 are detected within the work area 205, but staying away from the living object(s) 270 so that the living object(s) is not disturbed, such as operating by point P3. The distance kept to the living object corresponds to the size of the non-working area 206.

The robotic lawnmower 100 may be configured to track the living object(s) 270 and adapt the location of the non-working area 206 according to the movements of the living object(s) 270, so that the non-working area 206 overlaps the location of the living object(s).

In one embodiment the robotic lawnmower 100 is configured to continuously scan the work area 205 or more beneficially, the non-working area 206, to determine whether living object(s) 270 is still present or not, and if it is determined that no living object(s) 270 is present, adapt its operation accordingly by initiating a new work session.

Figure 4 shows a schematic overview of a robotic lawnmower system (200) according to herein where the robotic lawnmower 100 is configured to detect a living object(s) 270 at point P1, to adapt its operating schedule by moving to operate at point P2, and to track the movements of the living object(s) 270 coming close to point P2 and adapt the operating schedule by moving to point P3. Alternatively, figure 4 shows the situation where the robotic lawnmower detects the presence of living object(s), adapts its operating schedule by moving away and then again detects that the living object(s) 270 in its vicinity and again adapts the operating schedule by moving to point P3.

In one embodiment the robotic lawnmower 100 is configured to return to the non-working area 206 as its operation is resumed, and to scan the non-working area 206 using the living object sensor 175 to determine whether the living object(s) is still present or not.

The robotic lawnmower 100 of the present invention is thus enabled to, through the use of a camera (and possibly other sensors) detect and track objects, identifying them as being living objects, and to make sure that the living object is not disturbed by the operation of the robotic lawnmower, by staying away from the general vicinity of the living object and/or by running in a silent mode when operating close to the vicinity of the living object. A living object here being assumed to be a human or a (pet) animal.

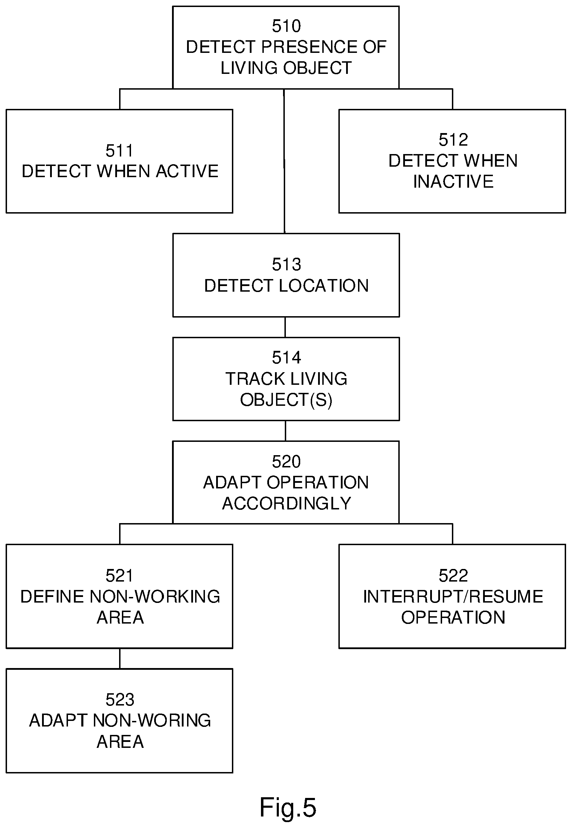

Figure 5 shows a flowchart for a general method according to herein where the robotic lawnmower 100 is configured to detect the presence of living object(s) 510 and adapt its operation accordingly 520.

The robotic lawnmower 100 may be configured to detect the presence of living object(s) continuously or at intervals while working 511, i.e when being active.

The robotic lawnmower 100 may alternatively or additionally be configured to detect the presence of living object(s) continuously or at intervals while being in the charging station 512 or otherwise having paused its operation, i.e. when being inactive.

The robotic lawnmower 100 may alternatively or additionally be configured to determine the location of detected living object(s) 270 513 and adapt its working operation accordingly, by defining 521 a non-working area 206 and adapting its operation by staying out of the non-working area 206, or by (simply) turning away from the detected living object(s) 270. Alternatively, the operation is adapted by interrupting the operation 522, or, if it is detected that no living object(s) is present when the robotic lawnmower 100 is inactive, resuming operation

The robotic lawnmower 100 may alternatively or additionally be configured to track 514 the detected living objects and adapt 514 the operation of the robotic lawnmower 100 accordingly, such as by adapting (expanding or moving) 523 a non-working area 206.

In one embodiment of a robotic lawnmower according to the teachings herein, the operating schedule relates to the time when the robotic lawnmower operates.

In one embodiment of a robotic lawnmower according to the teachings herein, the operating schedule relates to the area where the robotic lawnmower operates. The scheduled operating area may be given as coordinates in a map. The scheduled operating area may also or alternatively be given as one or more segments of a work area 205.

In one embodiment of a robotic lawnmower according to the teachings herein, the operating schedule relates to the time when the robotic lawnmower operates and to the area where the robotic lawnmower operates.

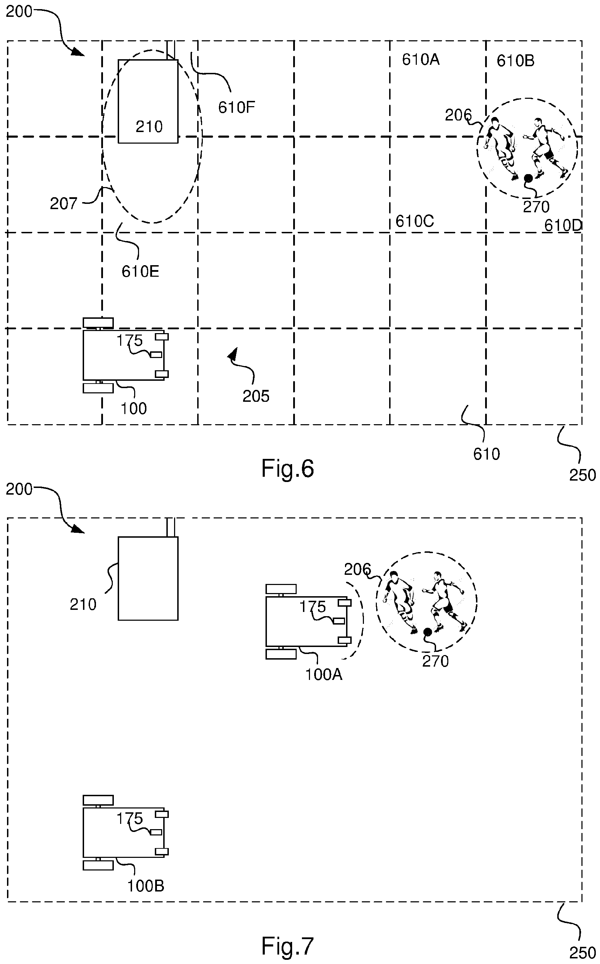

Figure 6 shows a schematic overview of a robotic lawnmower system 200 according to the teachings herein. As can be seen the work area 205 is divided into segments 610. The size, distribution, number and placing of the segments 610 is only for illustrative purposes and it should be understood that many alternatives exist.

Assuming that the robotic lawnmower 100 has detected the presence of the living objects 207 and defined a keep out area 206, it may be configured to define the keep out area 206 to correspond to the overlapping segments 610A, 610B, 610C and 610D. For an operating schedule based on segments, the keep out area 206 may thus be defined as the segment(s) in which the living object(s) 270 is/are detected.

In one embodiment, the robotic lawnmower may also be configured to define a safe area 207. In one example embodiment, the safe area is the area around or surrounding the charging station 210. For an operating schedule based on segments, the safe area 207 may thus be defined as the segment(s) 610E, 610F in which the charging station 210 is located.

A safe area is defined as an area where the robotic lawnmower is allowed to operate, or at least move, even if living objects are detected therein. This to ensure that the robotic lawnmower is able to reach its charging or other servicing station. In one embodiment, the robotic lawnmower is configured to adapt its operating schedule by turning off the grass cutter when operating in a safe area 207 if a living objects is detected therein. The remaining segments 610 thus constitute the current allowed work area 205.

In one embodiment, the controller is configured to adapt the operating schedule by changing the time that the robotic lawnmower is to operate.

In one embodiment, the controller is configured to adapt the operating schedule by changing the area, such as a segment or an area given by map coordinates, that the robotic lawnmower is to operate in.

In one embodiment, the controller is configured to adapt the operating schedule by changing the time that the robotic lawnmower is to operate in an area, such as a segment or an area given by map coordinates.

In one embodiment, the controller is configured to adapt the operating schedule by operating the robotic lawnmower in a silent mode as a living object is detected. In such an embodiment, the robotic lawnmower may be adapted so that it does not interfere or bother any nearby human activities.

Figure 7 shows an example embodiment of a robotic lawnmower system 200 according to the teachings herein, where the system comprises more than one robotic lawnmower 100, such as a first robotic lawnmower 100A and a second robotic lawnmower 100B.

In such an embodiment, the first robotic lawnmower may be configured to communicate to the second robotic lawnmower, either directly through a communication interface or indirectly through the charging station or a server, that a living object 270 has been detected and where. The second robotic lawnmower 100B may be configured to receive information that a living object 270 has been detected and where, either directly from the first robotic lawnmower 100A through a communication interface or indirectly through the charging station or a server, and adapt its operating schedule accordingly.

In one embodiment, the robotic lawnmower 100 is configured to determine where a living object 270 has been detected and adapt its operating schedule accordingly by determining the non-working area 206. In one embodiment, the robotic lawnmower 100 is configured to adapt its operating schedule accordingly by receiving information of a non-working area 206 or, alternatively, receiving information of an allowed working area, from a server or another robotic lawnmower 100.

The invention has mainly been described above with reference to a few embodiments. However, as is readily appreciated by a person skilled in the art, other embodiments than the ones disclosed above are equally possible within the scope of the invention, as defined by the appended patent claims.

## Claims

1. A method for use in a robotic lawnmower (100) configured to operate within a work area according to an operating schedule, the method comprising
detecting the presence of living object(s) (510);
determining a location of where the living object(s) (270) has been detected and
adapting the operating schedule accordingly (520), wherein the method is **characterized in that** the method further comprises adapting the operating schedule by
determining a non-working area (206) around the location of the living object(s),
staying out of the non-working area (206),
tracking the living object(s) (270) and
adapting a location of the non-working area (206) according to the movements of the living object(s) 270, so that the non-working area (206) overlaps the location of the living object(s).

2. The method according to claim 1, wherein the method further comprises receiving information of presence of living object(s) from a server.

3. The method according to claim 1 or 2, wherein the method further comprises receiving information of presence of living object(s) from another robotic lawnmower (100).

4. The method according to claim 1, wherein the method further comprises adapting the operating schedule accordingly by receiving information of the non-working area (206) from a server.

5. The method according to claim 1, wherein the method further comprises adapting the operating schedule accordingly by receiving information of the non-working area (206) from another robotic lawnmower (100).

6. The method according to claim 1, wherein the method further comprises detecting the presence of living object(s) while being active (511).

7. The method according to any previous claim, wherein the operating schedule relates to the time when the robotic lawnmower operates.

8. The method according to any previous claim, wherein the operating schedule relates to the area where the robotic lawnmower operates.

9. The method according to claim 8, wherein the scheduled operating area is given as coordinates in a map.

10. The method according to claim 8 or 9, wherein the scheduled operating area is given as one or more segments of a work area (205).

11. The method according to any previous claim, wherein the operating schedule relates to the time when the robotic lawnmower operates and to the area where the robotic lawnmower operates.

12. The method according to any previous claim, wherein the method further comprises adapting the operating schedule by operating the robotic lawnmower in a silent mode.

13. A robotic working tool configured to execute the method of any previous claim.

## Patentansprüche

1. Verfahren zur Verwendung in einem Roboterrasenmäher (100), der dazu ausgelegt ist, gemäß einem Betriebsplan in einem Arbeitsbereich betrieben zu werden, wobei das Verfahren Folgendes umfasst
Detektieren der Anwesenheit von einem oder mehreren lebenden Objekten (510);
Bestimmen eines Ortes, an dem das eine oder die mehreren Objekte (270) detektiert wurden, und
entsprechendes Anpassen des Betriebsplans (520), wobei das Verfahren **dadurch gekennzeichnet ist, dass** das Verfahren ferner das Anpassen des Betriebsplans durch Folgendes umfasst
Bestimmen eines Nichtarbeitsbereichs (206) um den Ort des einen oder der mehreren lebenden Objekte,
Fernhalten aus dem Nichtarbeitsbereich (206),
Verfolgen des einen oder der mehreren lebenden Objekte (270) und
Anpassen eines Ortes des Nichtarbeitsbereichs (206) gemäß den Bewegungen des einen oder der mehreren lebenden Objekte (270), derart, dass der Nichtarbeitsbereich (206) den Ort des einen oder der mehreren lebenden Objekte überlappt.

2. Verfahren nach Anspruch 1, wobei das Verfahren ferner das Empfangen von Informationen über die Anwesenheit von einem oder mehreren lebenden Objekten von einem Server umfasst.

3. Verfahren nach Anspruch 1 oder 2, wobei das Verfahren ferner das Empfangen von Informationen über die Anwesenheit von einem oder mehreren lebenden Objekten von einem anderen Roboterrasenmäher (100) umfasst.

4. Verfahren nach Anspruch 1, wobei das Verfahren ferner das entsprechende Anpassen des Betriebsplans durch Empfangen von Informationen über den Nichtarbeitsbereich (206) vom Server umfasst.

5. Verfahren nach Anspruch 1, wobei das Verfahren ferner das entsprechende Anpassen des Betriebsplans durch Empfangen von Informationen über den Nichtarbeitsbereich (206) von einem anderen Roboterrasenmäher (100) umfasst.

6. Verfahren nach Anspruch 1, wobei das Verfahren ferner das Detektieren der Anwesenheit von einem oder mehreren lebenden Objekten im aktiven Zustand umfasst (511) .

7. Verfahren nach einem der vorhergehenden Ansprüche, wobei sich der Betriebsplan auf die Zeit bezieht, zu der der Roboterrasenmäher in Betrieb ist.

8. Verfahren nach einem der vorhergehenden Ansprüche, wobei sich der Betriebsplan auf den Bereich bezieht, in dem der Roboterrasenmäher in Betrieb ist.

9. Verfahren nach Anspruch 8, wobei der geplante Betriebsbereich als Koordinaten in einer Karte angegeben ist.

10. Verfahren nach Anspruch 8 oder 9, wobei der geplante Betriebsbereich als ein oder mehrere Segmente eines Arbeitsbereichs angegeben ist (205).

11. Verfahren nach einem der vorhergehenden Ansprüche, wobei sich der Betriebsplan auf die Zeit bezieht, zu der der Roboterrasenmäher in Betrieb ist, und auf den Bereich, in dem der Roboterrasenmäher in Betrieb ist.

12. Verfahren nach einem der vorhergehenden Ansprüche, wobei das Verfahren ferner das Anpassen des Betriebsplans durch Betreiben des Roboterrasenmähers in einem leisen Modus umfasst.

13. Roboterarbeitswerkzeug, das dazu ausgelegt ist, das Verfahren eines der vorhergehenden Ansprüche auszuführen.

## Revendications

1. Procédé d'utilisation dans une tondeuse à gazon robotique (100) configurée pour fonctionner dans une zone de travail conformément à un programme d'exploitation, le procédé comprenant
la détection de la présence d'un ou plusieurs objets vivants (510) ;
la détermination d'un emplacement où les un ou plusieurs objets vivants (270) ont été détectés et
l'adaptation en conséquence du programme d'exploitation (520), le procédé étant **caractérisé en ce qu'**il comprend en outre l'adaptation du programme d'exploitation en
déterminant une zone de non-travail (206) autour de l'emplacement des un ou plusieurs objets vivants,
restant en dehors de la zone de non-travail (206),
suivant les un ou plusieurs objets vivants (270) ;
adaptant un emplacement de la zone de non-travail (206) en fonction des mouvements des un ou plusieurs objets vivants 270, de telle sorte que la zone de non-travail (206) chevauche l'emplacement des un ou plusieurs objets vivants.

2. Procédé selon la revendication 1, le procédé comprenant en outre la réception d'informations de présence d'un ou plusieurs objets vivants à partir d'un serveur.

3. Procédé selon la revendication 1 ou 2, le procédé comprenant en outre la réception d'informations de présence d'un ou plusieurs objets vivants à partir d'une autre tondeuse à gazon robotique (100).

4. Procédé selon la revendication 1, le procédé comprenant en outre l'adaptation en conséquence du programme d'exploitation en recevant des informations de la zone de non-travail (206) à partir d'un serveur.

5. Procédé selon la revendication 1, le procédé comprenant en outre l'adaptation en conséquence du programme d'exploitation en recevant des informations de la zone de non-travail (206) à partir d'une autre tondeuse à gazon robotique (100).

6. Procédé selon la revendication 1, le procédé comprenant en outre la détection de la présence d'un ou plusieurs objets vivants quand ils sont actifs (511).

7. Procédé selon toute revendication précédente, dans lequel le programme d'exploitation se rapporte à l'heure à laquelle la tondeuse à gazon robotique fonctionne.

8. Procédé selon toute revendication précédente, dans laquelle le programme d'exploitation se rapporte à la zone où la tondeuse à gazon robotique fonctionne.

9. Procédé selon la revendication 8, dans lequel la zone d'exploitation programmée est donnée sous forme de coordonnées sur une carte.

10. Procédé selon la revendication 8 ou 9, dans lequel la zone d'exploitation programmée est donnée sous forme d'un ou plusieurs segments d'une zone de travail (205).

11. Procédé selon toute revendication précédente, dans lequel le programme d'exploitation se rapporte à l'heure à laquelle la tondeuse à gazon robotique fonctionne et à la zone où la tondeuse à gazon robotique fonctionne.

12. Procédé selon toute revendication précédente, le procédé comprenant en outre l'adaptation du programme d'exploitation en exploitant la tondeuse à gazon robotique dans un mode silencieux.

13. Outil de travail robotique configuré pour exécuter le procédé selon toute revendication précédente.
